# EUROPÄISCHE PATENTANMELDUNG

(11) **EP 2 397 028 A1**
(43) Veröffentlichungstag der Anmeldung: **21.12.2011**
(21) Anmeldenummer: 11170313.8
(22) Anmeldetag: 17.06.2011
(51) Int. Cl.: A01G 1/00, A01G 9/02

(54) **Bepflanzbares Fassadensystem**

(30) Priorität: 17.06.2010 AT 10022010
(71) Anmelder: Glanz, Markus, 2822 Bad Erlach (AT); Lichtblau, Andreas, 3033 Hochstrass (AT); Zecha, Jörg, 3033 Hochstrass (AT)
(72) Erfinder: Glanz, Markus, 2822 Bad Erlach (AT); Lichtblau, Andreas, 3033 Hochstrass (AT); Zecha, Jörg, 3033 Hochstrass (AT); Schmidhammer, Alexander, 3441 Baumgarten (AT)
(74) Vertreter: Hehenberger, Reinhard

(57) **Zusammenfassung**

Ein bepflanzbares Fassadensystem (1) weist eine tragende, an einer Gebäudewand (2) befestigbaren Struktur sowie ein daran angeordnetes Pflanzsubstrat (12) auf. Die tragende Struktur weist eine Trägerplatte (3) auf, welche über eine Halterung (4, 5, 7) im Abstand von der Gebäudewand (2) befestigbar ist. Das Pflanzsubstrat (12) ist auf der der Halterung (4, 5, 7) gegenüber liegenden Seite der Trägerplatte (3) angeordnet und auf der der Trägerplatte (3) gegenüber liegenden Außenseite von einer Deckschicht (13) abgedeckt.

## Beschreibung

Die Erfindung betrifft ein bepflanzbares Fassadensystem mit einer tragenden, an einer Gebäudewand befestigbaren Struktur sowie einem daran angeordneten Pflanzsubstrat.

Der Erfindung liegt die Aufgabe zu Grunde, ein derartiges Fassadensystem zur Verfügung zu stellen, dass stabil aufgebaut und einfach zu bepflanzen ist.

Gelöst wird diese Aufgabe bei einem derartigen Fassadensystem dadurch, dass die tragende Struktur eine Trägerplatte aufweist, welche über eine Halterung im Abstand von der Gebäudewand befestigbar ist, dass das Pflanzsubstrat auf der der Halterung gegenüber liegenden Seite der Trägerplatte angeordnet ist und dass das Pflanzsubstrat auf der der Trägerplatte gegenüber liegenden Außenseite von einer Deckschicht abgedeckt ist.

Durch die Abstandhalter ist eine Hinterlüftung zwischen der Trägerplatte und der Gebäudewand gewährleistet, wodurch ein Feuchtigkeitseintrag aus dem Fassadensystem in die Gebäudewand vermieden werden kann. Durch die Deckschicht wiederum ist gewährleistet, dass die Pflanzen mit ihrem Wurzelballen auch bei einer Neubepflanzung fest im Pflanzsubstrat gehalten werden und außerdem das Pflanzsubstrat selbst festgehalten bzw. fixiert wird.

In einer bevorzugten Ausführungsform der Erfindung weist die Deckschicht Öffnungen, beispielsweise Schlitze, auf, durch welche Wurzelballen von Pflanzen in das Pflanzsubstrat gesteckt werden können. Dabei ist des weiteren bevorzugt, wenn im Pflanzsubstrat Ausnehmungen für Wurzelballen vorbereitet sind. Auf diese Weise können Neubepflanzungen sehr rasch und einfach durchgeführt werden, da die Wurzelballen der Pflanzen nur durch die Schlitze in die vorbereiteten Ausnehmungen gesteckt werden müssen und die Pflanzen von der Deckschicht, beispielsweise einem Vlies oder Filz, festgehalten werden.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung eines bevorzugten Ausführungsbeispiels der Erfindung unter Bezugnahme auf die angeschlossene Zeichnung.

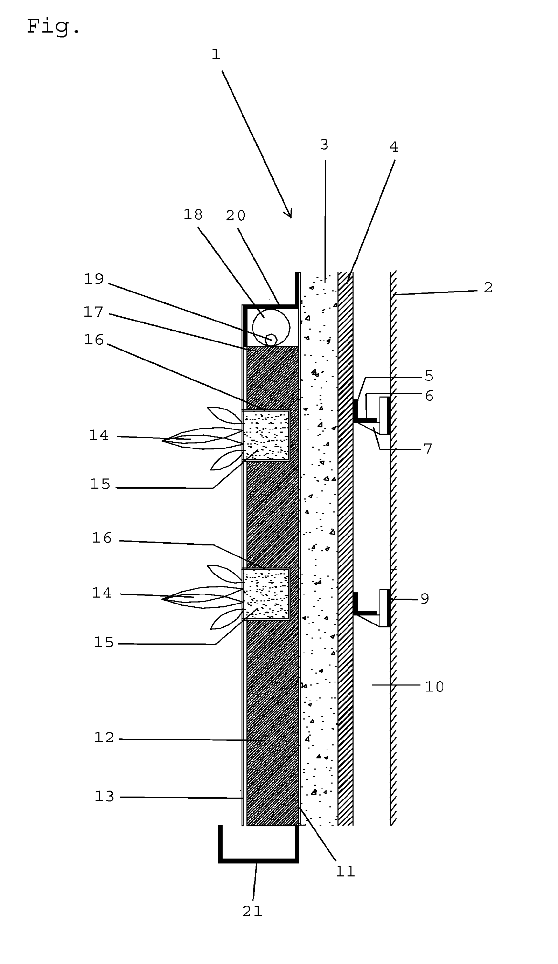

In der Zeichnung ist ein erfindungsgemäßes Fassadensystem 1 dargestellt, dass an einer Gebäudewand 2 befestigt ist. Das Fassadensystem 1 weist eine Trägerplatte 3 auf, an deren der Gebäudewand 2 zugewandten Seite ein profiliertes Blech 4 angeschraubt ist. Das Blech 4 weist im dargestellten Ausführungsbeispiel ein Profil mit trapezförmigen Erhebungen bzw. Vertiefungen auf, die vertikal angeordnet sind, damit die Luft in den vertikalen Kanälen zwischen der Trägerplatte 3 und dem Blech 4 vertikal zirkulieren kann.

An der der Gebäudewand 2 zugewandten Seite sind am Blech 4 horizontal ausgerichtete L-förmige Profile 5 angeschraubt, wobei die vom Blech 4 rechtwinklig abstehenden Schenkel 6 an Montagewinkeln 7 befestigt sind, welche ihrerseits über Isolationsplatten 9 an der Gebäudewand 2 angeschraubt sind. Auf diese Weise wird zwischen dem Blech 4 und der Gebäudewand 2 ein Freiraum 10 geschaffen, der einer guten Hinterlüftung des Fassadensystems dient.

Auf der von der Gebäudewand 2 abgewandten Seite der Trägerplatte 3 ist eine Folie, ein Geflecht, Gewebe 11 oder dergleichen befestigt, an welcher Wurzeln von Pflanzen gut haften können bzw. welches von den Wurzeln durchdrungen werden kann, wodurch die Pflanzen, welche durch ihr Wachstum zunehmend schwerer werden, unmittelbar an der Trägerplatte 3 gehalten werden. Ein auf der Folie, dem Geflecht oder Gewebe 11 angeordnetes Pflanzsubstrat 12, in welchem sich die Wurzeln der Pflanzen gut ausbreiten können, muss somit keine besonders große Festigkeit aufweisen und kann beispielsweise durch Schafwolle oder Steinwolle gebildet werden.

Auf der von der Trägerplatte 3 abgewandten Seite ist das Pflanzsubstrat 12 von einer Deckschicht, beispielsweise einem Vlies 13, abgedeckt, was nicht nur einem zu raschen Austrocknen des Pflanzsubstrates 12 sondern auch einem Ablösen von Pflanzsubstrat 12 entgegenwirkt. Außerdem hält das Vlies 13, das bevorzugt eine höhere Festigkeit bzw. Tragkraft als das Pflanzsubstrat 12 aufweist, die Pflanzen 14 mit ihrem Wurzelballen 15 in ihrer Position, was besonders bei Neubepflanzungen von Vorteil ist, bei welchen die Pflanzen noch nicht großflächig verwurzelt sind.

Um eine neue Bepflanzung des erfindungsgemäßen Fassadensystem 1 zu erleichtern, sind in regelmäßigen Abständen Schlitze im Vlies 13 und hinter den Schlitzen Vertiefungen 16 im Pflanzsubstrat 12 vorbereitet, in welche die Wurzelballen 15 gesteckt werden können. Bei Bedarf können die Vertiefungen 16 auch einen kleineren Durchmesser als die Wurzelballen 15 aufweisen, so dass die Wurzelballen 15 sofort gut im Pflanzsubstrat 12 festgehalten werden. Einen zusätzlichen Halt finden die Wurzelballen 15 durch das Vlies 13.

Im Bereich des oberen Randes 17 des Pflanzsubstrates 12 befindet sich entweder in das Pflanzsubstrat 12 eingebettet oder darüber angeordnet ein perforiertes Rohr 18, beispielsweise ein Dränagerohr, in welchem eine Leitung 19 aufgenommen ist, durch welches aus einer Reihe von entlang der Leitung 19 angeordneten Löchern Wasser austritt, um die Pflanzen 14 durch das Pflanzsubstrat 12 zu gießen.

Gehalten wird das Pflanzsubstrat 12 mit dem darüber angeordneten Vlies 13 über Winkelprofile 20 und 21, wobei das obere Winkelprofil 20 im dargestellten Ausführungsbeispiel ein Z-förmiges Profil und das untere Winkelprofile 21 ein U-förmiges Profil ist, durch welches überschüssiges Wasser abgeleitet werden kann. Das Vlies 13 ist an den Winkelprofilen 20 und 21 befestigt.

Das erfindungsgemäße Fassadensystem kann aus Modulplatten aufgebaut sein, welche beispielsweise vorgefertigte Elemente bestehend aus Trägerplatte 3 mit Folie 11, Pflanzsubstrat 12, Vlies 13, Rohr 18 sowie Winkelprofilen 20, 21 auf der einen Seite und L-förmigen Profilen 5 auf der anderen Seite sein können, welche neben- und übereinander an den Winkelprofilen 7 an der Wand befestigt werden. Nach deren Montage muss anschließend nur noch die Leitung 19 durch die Rohre 18 gelegt werden und das erfindungsgemäße Fassadensystem 1 ist fertig montiert.

Bei der Erfindung sind verschiedene Varianten möglich, welche in der Zeichnung nicht dargestellt sind. Beispielsweise wäre es möglich, das Blech 4 direkt an die Gebäudewand 2 zu schrauben oder auf eine andere Art und Weise direkt an der Gebäudewand 2 zu befestigen, da dennoch eine gute Hinterlüftung zwischen der Trägerplatte 3 und der Gebäudewand 2 gegeben wäre. Auch könnte auf das profilierte Blech 4 verzichtet werden und die Trägerplatte 3 direkt oder indirekt, z.B. über Montagewinkel 7, an der Gebäudewand 2 befestigt werden. Außerdem wäre es beispielsweise auch möglich, auf eine Folie ein Geflecht oder Gewebe 11 zu verzichten, und statt dessen andere Maßnahmen wie Bügel, Gitter, Streben oder dergleichen an der Trägerplatte 3 anzubringen, um das Pflanzsubstrat 12 mit den darin verwurzelten Pflanzen 14 fest zu halten.

## Patentansprüche

1. Bepflanzbares Fassadensystem (1) mit einer tragenden, an einer Gebäudewand (2) befestigbaren Struktur sowie einem daran angeordneten Pflanzsubstrat (12), **dadurch gekennzeichnet, dass** die tragende Struktur eine Trägerplatte (3) aufweist, welche über eine Halterung (4, 5, 7) im Abstand von der Gebäudewand (2) befestigbar ist, dass das Pflanzsubstrat (12) auf der der Halterung (4, 5, 7) gegenüber liegenden Seite der Trägerplatte (3) angeordnet ist und dass das Pflanzsubstrat (12) auf der der Trägerplatte (3) gegenüber liegenden Außenseite von einer Deckschicht (13) abgedeckt ist.

2. Fassadensystem (1) nach Anspruch 1, **dadurch gekennzeichnet, dass** die Deckschicht (13) Öffnungen, beispielsweise Schlitze, aufweist, durch welche Wurzelballen (15) von Pflanzen (14) in das Pflanzsubstrat (12) gesteckt werden können.

3. Fassadensystem (1) nach Anspruch 2, **dadurch gekennzeichnet, dass** im Pflanzsubstrat (12) Ausnehmungen (16) für Wurzelballen (15) vorbereitet sind.

4. Fassadensystem (1) nach einem der Ansprüche 1 bis 3, **dadurch gekennzeichnet, dass** die Deckschicht (13) ein Vlies oder Filz ist.

5. Fassadensystem (1) nach einem der Ansprüche 1 bis 4, **dadurch gekennzeichnet, dass** das Pflanzsubstrat (12) Schafwolle oder Steinwolle ist.

6. Fassadensystem (1) nach einem der Ansprüche 1 bis 5, **dadurch gekennzeichnet, dass** zwischen dem Pflanzsubstrat (12) und der Trägerplatte (3) eine tragfähige Folie oder ein tragfähiges Gewebe oder Geflecht (11) angeordnet ist, an welchem Wurzeln haften können bzw. welches von Wurzeln durchdrungen werden kann.

7. Fassadensystem (1) nach einem der Ansprüche 1 bis 6, **dadurch gekennzeichnet, dass** die Halterung (4, 5, 7) Montagewinkel (7) aufweist.

8. Fassadensystem (1) nach Anspruch 7, **dadurch gekennzeichnet, dass** an der Trägerplatte (3) horizontal ausgerichtete, L-förmige Profile (5) befestigt sind, an welchen die Montagewinkel (7) befestigt sind.

9. Fassadensystem (1) nach einem der Ansprüche 1 bis 7, **dadurch gekennzeichnet, dass** die Halterung (4, 5, 7) ein profiliertes Blech (4) aufweist, dessen Profilierung vertikal ausgerichtet ist.

10. Fassadensystem (1) nach Anspruch 7 und 9, **dadurch gekennzeichnet, dass** am profilierten Blech (4) horizontal ausgerichtete, L-förmige Profile (5) befestigt sind, an welchen die Montagewinkel (5) befestigt sind.

11. Fassadensystem (1) nach Anspruch 9 oder 10, **dadurch gekennzeichnet, dass** das Blech (4) trapezförmig profiliert ist.

12. Fassadensystem (1) nach einem der Ansprüche 1 bis 10, **dadurch gekennzeichnet, dass** im oder über dem Pflanzsubstrat (12) wenigstens ein im wesentlichen horizontal ausgerichtetes, perforiertes Rohr (18) angeordnet ist, durch welches Wasser in das Pflanzsubstrat (12) zuführbar ist.

13. Fassadensystem (1) nach Anspruch 12, **dadurch gekennzeichnet, dass** im perforierten Rohr (18) eine Leitung (19) mit kleinerem Durchmesser zum Zuführen von Wasser angeordnet ist.
